# FASCICULE DE BREVET EUROPEEN

(11) **EP 3 102 487 B1**
(45) Date de publication et mention de la délivrance du brevet: **25.04.2018**
(21) Numéro de dépôt: 15704355.5
(22) Date de dépôt: 22.01.2015
(51) Int. Cl.: B64C 11/18, F01D 5/14

(54) **PALE POUR UNE HELICE DE TURBOMACHINE, NOTAMMENT A SOUFFLANTE NON CARENEE, HELICE ET TURBOMACHINE COMPRENANT UNE TELLE PALE**
SCHAUFEL FÜR DEN PROPELLER EINER TURBOMASCHINE, INSBESONDERE MIT OFFENEM PROPELLER, PROPELLER UND TURBOMASCHINE MIT EINER SOLCHEN SCHAUFEL
BLADE FOR THE ROTOR OF A TURBO-ENGINE, IN PARTICULAR OF OPEN ROTOR TYPE, ROTOR AND TURBO-ENGINE COMPRISING SUCH A BLADE

(30) Priorité: 05.02.2014 FR 1450874
(43) Date de publication de la demande: 14.12.2016
(73) Titulaire: Safran Aircraft Engines, 75015 Paris (FR)
(72) Inventeur: VION, Laurence, Francine, F-77550 Moissy-Cramayel Cedex (FR); FERNANDO, Rasika, F-77550 Moissy-Cramayel Cedex (FR); JODET, Norman, Bruno, André, F-77550 Moissy-Cramayel Cedex (FR)
(74) Mandataire: Gevers & Orès
(86) Numéro de dépôt international: PCT/FR2015/050158
(87) Numéro de publication internationale: WO 2015/118243

(56) Documents cités:
- US-A1- 2006 060 720
- US-A1- 2006 060 721

## Description

### DOMAINE TECHNIQUE

La présente invention concerne une pale pour une hélice de turbomachine, notamment à soufflante non carénée, une hélice et une turbomachine correspondantes.

### ETAT DE L'ART

Bien que la présente invention soit particulièrement adaptée aux turbomachines à soufflante non carénée (désignées en anglais « unducted fan »), sa mise en oeuvre n'en est toutefois pas limitée à une telle application.

De façon connue, une turbomachine à soufflante non carénée peut comprendre deux hélices externes coaxiales et contrarotatives, respectivement amont (avant) et aval (arrière), qui sont chacune entraînées en rotation par une turbine et qui s'étendent, sensiblement radialement, à l'extérieur de la nacelle de la turbomachine. Chaque hélice comprend usuellement un moyeu concentrique à l'axe longitudinal de la turbomachine, sur lequel sont fixées des pales.

L'interaction aérodynamique entre les hélices contrarotatives amont et aval d'une telle turbomachine à soufflante non carénée engendre des niveaux acoustiques de fonctionnement très élevés. En effet, la rotation des pales des hélices contrarotatives amont et aval provoque, entre autre, la formation :
- de sillages le long de l'envergure des pales, en aval de celles-ci ;
- de tourbillons principaux à l'extrémité libre des pales.
Ces perturbations aérodynamiques en aval de l'hélice amont sont en partie à l'origine de bruit aérodynamique d'interaction lorsqu'elles heurtent l'hélice aval ou passent à proximité de celle-ci.

En particulier, lors des phases de fonctionnement à basse vitesse d'une turbomachine à soufflante non carénée (telles que, lorsqu'elle est montée sur un aéronef, le décollage, la phase de montée, l'atterrissage et l'approche), la contribution dominante du bruit rayonné provient des raies d'interaction associées à l'hélice aval qui fonctionne dans le flux de l'hélice amont, en traversant les nappes tourbillonnaires constituées de sillages et tourbillons principaux formés par les pales de l'hélice amont (également désignées pales amont). Lorsqu'un tourbillon marginal de pales amont interagit avec les pales de l'hélice aval (autrement appelées pales aval), l'interaction pale aval - tourbillon marginal domine le spectre acoustique rayonné pour la plupart des directivités.

Aussi, pour réduire les émissions sonores indésirables de telles turbomachines et ainsi satisfaire aux critères de certifications acoustiques imposés par les autorités aériennes, il est nécessaire de réduire le bruit rayonné à basse vitesse en réduisant l'interaction pale aval - tourbillon marginal.

Actuellement, la solution connue la plus répandue - dénommée écrêtage (ou « clipping » en anglais) - consiste à réduire le diamètre de l'hélice aval, de manière à faire passer les tourbillons principaux engendrés par les pales amont à l'extérieur des pales aval pour limiter l'interaction de ces dernières avec les tourbillons principaux. Cela implique généralement une augmentation de la corde des pales aval pour maintenir la traction désirée et le rapport de couple entre les hélices amont et aval. Une telle solution peut être poussée à l'extrême en chargeant très fortement l'extrémité des pales amont, de manière à décharger le reste de chacune des pales amont pour réduire l'impact du sillage de l'hélice amont sur l'hélice aval, également à l'origine de bruit d'interaction indésirable.

Cependant, une telle solution ne s'avère acceptable que pour une configuration isolée de la turbomachine (c'est-à-dire sans élément extérieur relié à celle-ci) et sans incidence. En présence d'éléments (mât, fuselage) ou d'incidence, la contraction et l'axisymétrie de l'écoulement d'air derrière l'hélice amont sont modifiées, de sorte que l'écrêtage réalisé ne prévient plus l'interaction des pales aval et des tourbillons principaux engendrés par les pales amont. Une réduction plus importante de la hauteur des pales aval (correspondant à un écrêtage important) implique une augmentation de la corde associée aux pales aval de façon à conserver la charge, ce qui dégrade le rendement de la turbomachine associée et n'est donc pas satisfaisant.

La demanderesse a proposé une autre solution à ce problème, dans la demande antérieure FR 2 980 818. Cette autre solution consiste à équiper chaque pale amont d'une unique excroissance sur son bord d'attaque, cette excroissance étant située dans un emplacement prédéterminée pour perturber localement, lors de la rotation de l'hélice, la répartition de la circulation autour de chaque pale, de manière à former deux tourbillons principaux indépendants en aval :
- un premier tourbillon naturel (ou tourbillon marginal) se formant à l'extrémité libre de la pale;
- un second tourbillon forcé distinct (ou tourbillon principal supplémentaire) ayant lieu au voisinage de l'excroissance.

Les tourbillons marginal et supplémentaire sont co-rotatifs (c'est-à-dire qu'ils présentent un même sens de rotation) et restent indépendants l'un de l'autre jusqu'à hélice aval. On réalise ainsi une modification de la distribution de la circulation autour d'une position locale unique et on aboutit à la formation de deux tourbillons - de plus faible intensité que l'unique tourbillon marginal observé dans la technique antérieure - qui ne fusionnent pas ensemble.

Cependant, la Demanderesse a constaté que cette autre solution n'est pas entièrement satisfaisante car elle n'est pas efficace quelles que soient les conditions de fonctionnement, c'est-à-dire les différentes phases de vol (décollage, croisière, atterrissage, etc.). En effet, la vitesse de rotation de l'hélice amont, la vitesse d'avancement de l'aéronef équipé de cette hélice, et l'angle de calage des pales de cette hélice par exemple, ont une influence sur la trajectoire des tourbillons des bords d'attaque des pales. Dans la solution proposée dans la demande antérieure FR 2 980 818, la position de l'excroissance de chaque pale est figée et déterminée pour une unique phase de vol, de préférence le décollage, afin de réduire les nuisances sonores pour les riverains de l'aéroport.

La présente invention a ainsi pour objet de remédier à cet inconvénient et, notamment, de réduire sensiblement le bruit rayonné par une turbomachine à soufflante non carénée à double hélices contrarotatives en affaiblissant l'interaction hélice aval - tourbillons principaux, quelles que soient les conditions de fonctionnement.

### EXPOSE DE L'INVENTION

L'invention propose ainsi une pale pour une hélice de turbomachine, notamment à soufflante non carénée, comportant sur son bord d'attaque une excroissance, caractérisée en ce qu'elle comprend des moyens de réglage de la position de l'excroissance le long de son bord d'attaque. De préférence, l'excroissance est configurée pour perturber, lors de la rotation de l'hélice, la répartition de la circulation autour de la pale, de manière à former deux tourbillons principaux indépendants en aval.

De façon classique, une pale d'hélice de turbomachine comprend un extrados et un intrados qui sont reliés ensemble, en amont, par un bord d'attaque et, en aval, par un bord de fuite. L'amont et l'aval font référence à l'écoulement des gaz à travers l'hélice, le bord d'attaque étant un bord d'attaque des gaz et le bord de fuite étant un bord de fuite des gaz. La pale comprend entre outre une extrémité inférieure ou radialement interne, appelée pied, et une extrémité supérieure ou radialement externe, appelée sommet, les orientations radiales étant définies par rapport à l'axe de rotation de l'hélice qui peut être l'axe longitudinal de la turbomachine.

L'invention est particulièrement avantageuse car elle permet d'ajuster la position de l'excroissance sur le bord d'attaque de la pale, en particulier en fonction des conditions de fonctionnement. Il est ainsi envisageable que l'excroissance de chaque pale soit dans une première position (par exemple basse) lors du décollage de l'aéronef comportant une turbomachine équipée de pales selon l'invention, qu'elle soit dans une seconde position (par exemple intermédiaire) lors du vol de croisière de l'aéronef, qu'elle soit dans une troisième position (par exemple supérieure lors de l'atterrissage de l'aéronef, etc. L'excroissance peut adopter au moins deux positions, et de préférence plusieurs positions, différentes le long du bord d'attaque de la pale. Naturellement, les excroissances des pales d'une même hélice sont de préférence dans la même position pour une condition de fonctionnement.

L'invention est particulièrement adaptée aux turbomachines à soufflante non carénée (désignées en anglais « unducted fan »), sa mise en oeuvre n'en est toutefois pas limitée à une telle application. Elle peut par exemple être appliquée à une soufflante carénée de turbomachine pour limiter les interactions entre le tourbillon généré par cette soufflante avec les structures aérodynamiques en aval de cette dernière. Elle peut également s'appliquer à une hélice d'un turbopropulseur pour limiter les interactions entre les tourbillons principaux générés par cette hélice avec la voilure de l'aéronef.

Selon un mode de réalisation de l'invention, l'excroissance est située à l'extrémité d'un doigt qui est guidé en translation dans une gorge s'étendant le long d'une partie du bord d'attaque de la pale. Les moyens de réglage sont ainsi du type à glissière, la gorge formant une glissière le long de laquelle peut se déplacer en translation l'excroissance.

Avantageusement, l'excroissance et la partie du bord d'attaque comportant la gorge sont recouvertes d'une membrane souple fixée à la pale. Cette membrane peut être élastiquement déformable. Elle est conçue pour autoriser le déplacement de l'excroissance le long du bord d'attaque tout en préservant localement la qualité de surface aérodynamique du profil de la pale. Elle assure en effet une continuité de surface aérodynamique entre la zone du bord d'attaque dans laquelle est située l'excroissance et le reste du bord d'attaque, ainsi qu'entre cette zone et l'intrados et l'extrados de la pale. La membrane est de préférence relativement fine (elle a par exemple une épaisseur comprise entre 1mm et 5mm). Elle peut être réalisée par exemple en polymères couverts d'une peau résistante à l'érosion.

Les inventeurs ont constaté que l'impact de l'invention sur les performances aérodynamiques de l'hélice est négligeable.

Avantageusement, la pale comprend des moyens de maintien sous vide du volume contenu entre la membrane et le bord d'attaque de la pale. Ceci permet à la membrane d'épouser au mieux la forme de l'excroissance et du bord d'attaque de la pale. Ceci permet de conserver sensiblement la forme exacte de l'excroissance, quelle que soit sa position sur le bord d'attaque.

La pale comprend de préférence des moyens de lubrification de l'interface entre l'excroissance et la membrane. Ceci permet de faciliter le déplacement de l'excroissance sur le bord d'attaque de la pale.

Selon un mode de réalisation, l'excroissance est reliée au piston d'un vérin de commande du déplacement de l'excroissance le long du bord d'attaque. Le vérin peut être un vérin pneumatique ou hydraulique et est alors reliée à une source de fluide sous pression tel qu'un gaz (par exemple de l'air) ou de l'huile.

Selon une variante de réalisation, l'excroissance est reliée à une extrémité d'au moins un câble dont une extrémité opposée est attachée à un arbre rotatif en vue de l'enroulement du câble autour dudit arbre. Ledit au moins un câble peut être guidé par au moins une poulie.

Selon une autre variante de réalisation, l'excroissance comprend une série d'éléments en matériau déformable du type piézoélectrique. Chacun desdits éléments est de préférence relié de manière indépendante à des moyens d'alimentation électrique.

La présente invention concerne également une hélice, notamment pour turbomachine à soufflante non carénée, caractérisée en ce qu'elle comporte une pluralité de pales du type de celle spécifiée ci-dessus.

L'hélice comporte de préférence une pluralité de pales dont les excroissances des pales sont reliées à la tige de piston d'un unique vérin de commande du déplacement de ces excroissances.

La présente invention concerne encore une turbomachine, notamment à soufflante non carénée, caractérisée par le fait qu'elle comporte au moins une hélice du type précité.

La turbomachine peut comporter un capteur, tel qu'un récepteur acoustique, monté au voisinage de l'hélice et configuré pour transmettre des informations à un calculateur, ce calculateur étant relié à des moyens d'actionnement des moyens de réglage des positions des excroissances des pales.

La présente invention concerne enfin un procédé de réduction des émissions sonores d'une turbomachine du type précité, caractérisé en ce que la position de l'excroissance le long du bord d'attaque de chaque pale est réglée en fonction des conditions de fonctionnement de la turbomachine, et en particulier en fonction d'un jeu de paramètres de fonctionnement comportant par exemple la vitesse de rotation de l'hélice et l'angle de calage de ses pales.

Des positions optimales des excroissances des pales peuvent être prédéterminées pour plusieurs conditions de fonctionnement. Le procédé peut alors consister, pour une condition de fonctionnement donnée, à mettre les excroissances des pales dans la position optimale prédéterminée correspondante.

Le procédé peut comprendre une étape de détection de tourbillons générés par l'hélice ou de détection du bruit généré par l'interaction de ces tourbillons avec une surface située en aval, et une étape de réglage de la position des excroissances des pales en fonction du signal (tel qu'un niveau de bruit) détecté à l'étape précédente.

### BREVE DESCRIPTON DES FIGURES

Les figures annexées feront bien comprendre comment l'invention peut être réalisée. Sur ces figures, des références identiques désignent des éléments semblables.
La figure 1 est une vue schématique en coupe longitudinale d'une turbomachine à soufflante non carénée équipée de pales amont, selon une réalisation conforme à l'invention.
La figure 2 est une vue schématique agrandie en élévation d'une pale amont de soufflante non carénée, selon la technique antérieure.
La figure 3 est une vue schématique agrandie en élévation d'une pale amont de soufflante non carénée, selon l'invention.
Les figures 4 et 5 représentent un mode de réalisation de la pale amont de la figure 3, conforme à la présente invention.
La figure 6 est une vue schématique d'une hélice de turbomachine comportant des pales selon une variante de réalisation de l'invention.
La figure 7 représente une variante de réalisation d'une pale selon l'invention.
Les figures 8 et 9 représentent une autre variante de réalisation d'une pale selon l'invention.

### DESCRIPTION DETAILLEE

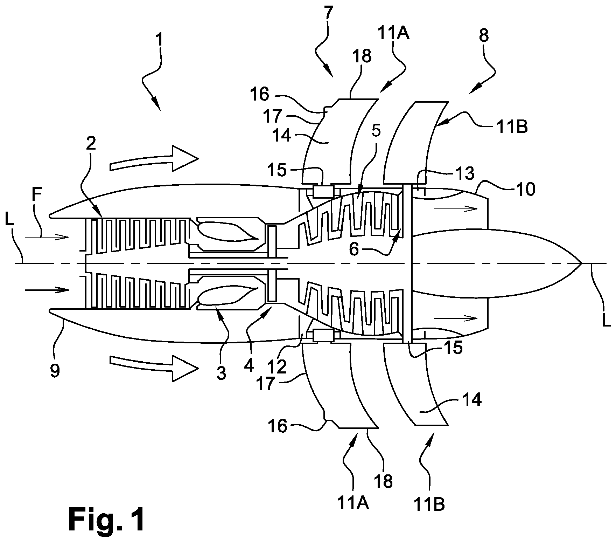

Sur la figure 1, on a représenté, de façon schématique et à titre d'exemple non limitatif, une turbomachine 1 à soufflante non carénée, conforme à l'invention, qui comporte d'amont en aval, dans le sens d'écoulement des gaz (symbolisés par la flèche F) à l'intérieur de la turbomachine d'axe longitudinal L-L, un compresseur 2, une chambre annulaire de combustion 3, une turbine haute pression 4 et deux turbines basse pression 5 et 6 qui sont contrarotatives, c'est-à-dire qu'elles tournent dans deux sens opposés autour de l'axe longitudinal L-L.

Chacune des turbines basse pression 5 et 6 est solidaire en rotation d'une hélice externe 7, 8 s'étendant radialement à l'extérieur de la nacelle 9 de la turbomachine 1, la nacelle 9 étant sensiblement cylindrique et s'étendant le long de l'axe L-L autour du compresseur 2, de la chambre de combustion 3 et des turbines 4, 5 et 6. Les gaz de combustion sortant des turbines sont expulsés à travers une tuyère 10 pour augmenter la poussée.

Les hélices 7 et 8 sont disposées coaxialement l'une derrière l'autre et comportent une pluralité de pales 11A et 11B équi-angulairement réparties autour de l'axe longitudinal L-L. Les pales 11A et 11B s'étendent sensiblement radialement et sont du type à calage variable, c'est-à-dire qu'elles peuvent tourner autour de leur axe longitudinal de manière à optimiser leur position angulaire en fonction des conditions de fonctionnement souhaitées de la turbomachine 1. Bien entendu, en variante, les pales des hélices pourraient également être à calage fixe.

Chaque hélice amont 7 ou aval 8 comprend un moyeu rotatif 12, 13 supportant les pales 11A, 11B et disposé de façon concentrique à l'axe longitudinal L-L de la turbomachine 1, perpendiculairement à celui-ci.

Les pales amont 11A et aval 11B sont chacune formées d'un corps de pale 14 et d'un pied de pale 15, monté de façon rotative sur le moyeu 12, 13 correspondant.

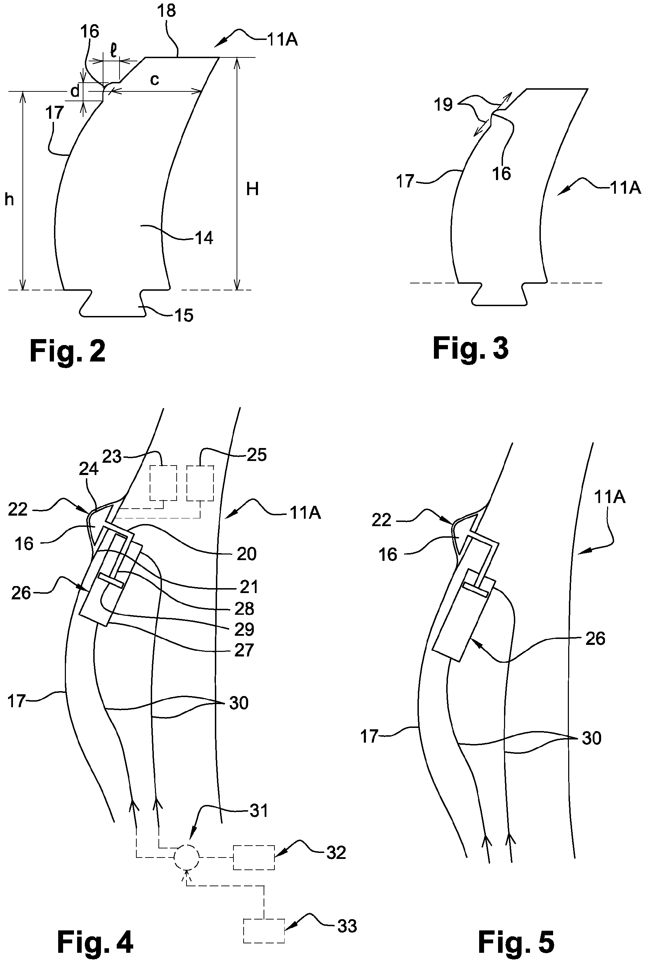

La figure 2 représente l'art antérieur tel que décrit dans la demande antérieure FR 2 980 818. Dans cet art antérieur, chaque pale 11A de l'hélice amont 7 comporte une unique excroissance 16 formée sur le bord d'attaque 17 de la pale 11A considérée.

Cette excroissance 16 au une forme arrondie et est définie par les paramètres suivants :
- une position fixe en envergure h, qui est comprise entre 0,75H et 0,85H, avec H la hauteur de la pale amont 11A ;
- une hauteur en envergure d, qui est comprise entre 0,05H et 0,2H ; et
- une largeur en corde I, qui est comprise entre c/16 et c/8, avec c la longueur de la corde locale de la pale à la position en envergure h de ladite excroissance 16.

L'excroissance 16 permet une perturbation de la répartition de la circulation autour de la pale amont 11A, ce qui provoque deux tourbillons principaux co-rotatifs :
- un premier tourbillon naturel (ou tourbillon marginal) se formant à l'extrémité libre 18 de la pale amont 11A ;
- un second tourbillon forcé distinct (ou tourbillon principal supplémentaire) ayant lieu au voisinage de l'unique excroissance 16.

L'excroissance 16 entraîne également la formation de tourbillons auxiliaires contra-rotatifs (c'est-à-dire de sens contraire aux deux tourbillons marginal et supplémentaire) qui s'intercalent entre les deux tourbillons principaux co-rotatifs empêchant ainsi leur fusion avant d'impacter l'hélice aval 8.

Autrement dit, lors de la rotation de l'hélice amont 7, l'excroissance 16 vient perturber localement la répartition de la circulation autour de la pale amont 11A, de manière à former deux tourbillons principaux indépendants en aval et qui le restent jusqu'à l'hélice aval 8.

Cette solution permet de scinder la source acoustique en deux sources déphasées, ce qui conduit à une diminution du bruit d'interaction.

L'invention, dont le principe est schématiquement représenté en figure 3, représente un perfectionnement à cette technologie.

Les inventeurs ont constaté que la traction cible (pour un point de vol concerné, qui représente la force nécessaire pour mettre en mouvement l'aéronef), notamment dans le cas d'un doublet d'hélices, peut être atteinte à l'aide de différentes combinaisons de paramètres tels que : la vitesse de rotation des hélices et l'angle de calage de leurs pales. A chaque combinaison de paramètres correspond une répartition de circulation autour de la pale amont 11A différente. Il est donc nécessaire d'adapter la position de l'excroissance 16 au point de vol considéré pour agir le plus efficacement possible. Des études ont montré que la position de l'excroissance 16 est déterminante dans l'obtention de l'effet voulu. En effet, cette excroissance 16 a pour effet d'influencer la génération des tourbillons des bords d'attaque des pales. Or, ceux-ci, dépendent, en termes de position et d'intensité, des paramètres de vol, tels que la vitesse d'avancement de l'aéronef, la vitesse de rotation des hélices et le calage angulaire des pales. Les inventeurs ont en effet constaté que les trajectoires des tourbillons des bords d'attaque sur les extrados des pales dépendent des configurations de vol, et donc que la position des tourbillons varie en fonction des paramètres de vol. Il faudrait donc que la position des excroissances soit adaptée à la position des tourbillons afin de réduire significativement le bruit d'interaction lors des différentes phases de vol.

La solution proposée consiste en une excroissance 16 localisée sur le bord d'attaque 17 de la pale 11A, dont le positionnement (flèches 19) le long de ce bord d'attaque, c'est-à-dire selon l'envergure h de la pale, peut s'adapter au point de vol (décollage, survol, croisière, approche, etc.). La solution répond ainsi au besoin précité.

Pour cela, l'invention propose d'équiper la pale 11A de moyens de réglage de la position de l'excroissance 16 le long de son bord d'attaque 17.

Les figures 4 et 5 représentent un mode de réalisation non exclusif de l'invention, dans lequel les moyens de réglage sont du type à glissière.

L'excroissance 16 est ici formée par un dôme et est portée par un doigt 20 qui est guidé dans une gorge 21 s'étendant le long d'une partie du bord d'attaque 17 de la pale 11A.

L'excroissance 16 peut être amenée et maintenue dans n'importe quelle position sur le bord d'attaque 17, entre deux positions extrêmes respectivement basse (figure 4) et haute (figure 5). Dans le cas où la position optimale de l'excroissance 16 peut varier entre 0,75H et 0,85H (H étant la hauteur de la pale amont 11A) selon les conditions de fonctionnement, la position extrême basse de la figure 4 est située à 0,75H et la position extrême haute de la figure 5 est située à 0,85H.

L'excroissance 16 et la partie de la pale 11A s'étendant autour de la gorge 21 sont recouvertes d'une membrane 22 de préférence souple et fine, qui est destinée à épouser la forme de l'excroissance 16 et du bord d'attaque 17 pour assurer une continuité de surface aérodynamique entre l'excroissance 16 et le reste de la pale et limiter les pertes de charge en fonctionnement. La partie de la membrane 22 recouvrant l'excroissance 16 définit une bosse qui reproduit de préférence le plus fidèlement possible la forme et les dimensions de l'excroissance 16. Le déplacement de l'excroissance 16 le long du bord d'attaque 17 entraîne une déformation, de préférence élastique, de la membrane 22. La bosse définie par la membrane 22 se déplace alors en suivant l'excroissance 16.

Comme cela est schématiquement représenté dans les dessins, la pale 11A est de préférence équipée :
- d'une part, de moyens 23 de lubrification de l'interface 24 entre l'excroissance 16 et la membrane 22, par exemple par injection d'huile de lubrification à cette interface, pour limiter les forces de frottement entre l'excroissance 16 et la membrane 22 pouvant s'opposer au déplacement de l'excroissance,
- et, d'autre part, de moyens 25 de mise sous vide du volume contenu entre la membrane 22 et l'excroissance 16, et de préférence également entre la membrane et la partie de la pale recouverte par la membrane 22. Ces moyens 25 sont par exemple des moyens d'aspiration de gaz destinés à maintenir une dépression dans le volume précité, de façon à ce que la membrane reste plaquée contre l'excroissance et la pale.

On comprend que la pale 11A est dans l'exemple représenté au moins en partie creuse et comprend au moins une cavité interne de logement des moyens 23, 25 précités.

Le doigt 20 est relié à des moyens d'actionnement qui comprennent dans l'exemple représenté un vérin de commande 26 du type pneumatique ou hydraulique. Le vérin 26 comprend un cylindre 27 solidaire de la pale 11A et une tige de piston 28 qui est reliée au doigt 20. L'excroissance 16 est déplacée d'une position à une autre le long du bord d'attaque 17 de la pale 11A par déplacement de la tige de piston 28 vis-à-vis du cylindre 27 du vérin 26, la tige de piston 28 pouvant sortir du cylindre 27 ou rentrer dans ce cylindre 27.

De façon classique, l'extrémité de la tige de piston 28 opposée au doigt 20 porte un disque 29 de séparation de deux chambres internes, respectivement avant et arrière, du cylindre 27. Chaque chambre est reliée à des moyens d'alimentation en fluide sous pression (gaz, huile, etc.) et d'évacuation de ce fluide, pour provoquer le déplacement de la tige de piston 28 relativement au cylindre 27 et donc le déplacement de l'excroissance 16. Les moyens d'alimentation et d'évacuation comprennent ici des conduites 30 de fluide qui sont destinées à être raccordées à une pompe 31 et à une source de fluide 32 situées de préférence à l'extérieur de la pale.

La pompe 31 est actionnée par un calculateur 33 qui contrôle ainsi le déplacement et la position de l'excroissance 16 de la pale 11A.

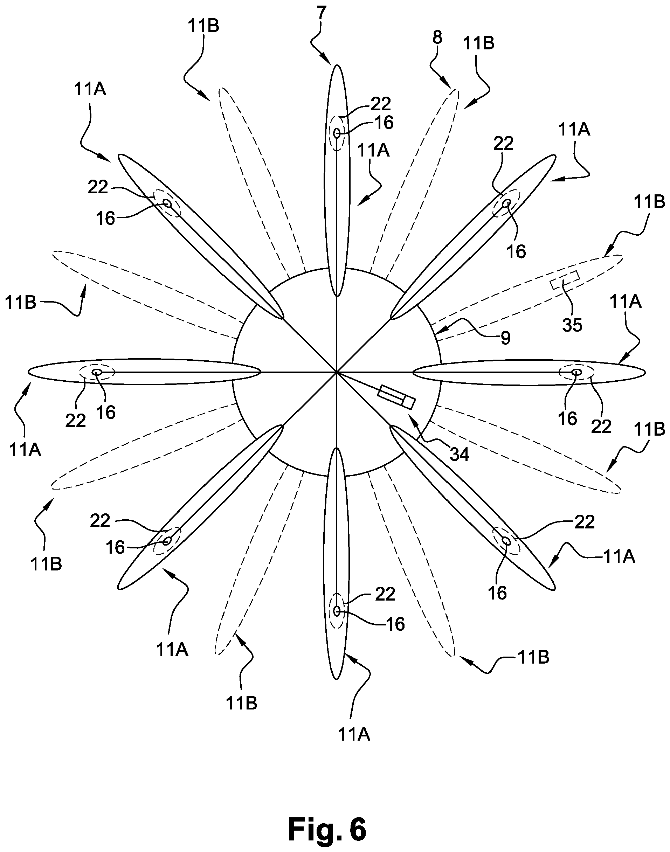

Comme cela est représenté aux figures 4 et 5, chaque pale 11A de l'hélice peut être équipée de son propre vérin 26. En variante et comme représenté en figure 6, un unique vérin 34 permet de commander, par exemple par l'intermédiaire d'un système de tringlerie, le déplacement des excroissances 16 de l'ensemble des pales 11A de l'hélice 7, qui sont également au moins en partie creuse. Ce vérin 34 peut être monté dans la nacelle 9 de la turbomachine 1.

La position optimale de l'excroissance 16 sur le bord d'attaque 17 d'une pale 11A peut : (i) soit être définie en amont de la conception à l'aide de calculs numériques, enregistrée dans les commandes de vol du moteur, et gérée par le calculateur 33, (ii) soit être déterminée au cours du vol au moyen du calculateur 33.

Dans le premier cas (i), les positions optimales des excroissances 26 des pales 11A qui, à un instant t, doivent être toutes identiques, sont calculées et prédéterminées en fonction des différents points de vol pour optimiser le but recherché à savoir réduire les nuisances sonores liées à l'interaction des tourbillons principaux générés par les pales de l'hélice amont 7 avec celles de l'hélice aval 8. On considère que chaque point de vol ou chaque condition de fonctionnement est défini par un jeu de plusieurs paramètres parmi lesquels la vitesse de rotation de l'hélice, la vitesse d'avancement de l'aéronef équipé de cette hélice, et l'angle de calage des pales de l'hélice. Ainsi, on dispose d'une position préprogrammée pour chaque jeu de paramètres. On comprend ainsi que le calculateur 33 va commander le déplacement des excroissances 16 des pales en fonction du point de vol en cours.

L'autre cas (ii) peut consister à équiper la turbomachine 1 d'au moins un capteur 35 tel qu'un capteur de pression ou un récepteur acoustique. Le calculateur 33 comprend alors un algorithme d'asservissement permettant d'ajuster la position des excroissances 16 de façon à minimiser le signal acoustique perçu par le capteur 35. Le capteur 35 est de préférence positionné à proximité de la zone d'impact des tourbillons, par exemple sur une des pales 11B de l'hélice aval 8, comme représenté en figure 6. La description qui précède fait référence à une turbomachine à soufflante non carénée. Bien que l'invention soit particulièrement adaptée pour une telle turbomachine, elle n'est pas limitée à cette application et peut être appliquée à d'autres types de turbomachine telle qu'un turbopropulseur ou une turbomachine à soufflante carénée.

Dans le cas d'un turbopropulseur, l'invention peut être appliquée à l'hélice de ce turbopropulseur de façon à limiter les nuisances sonores liées à l'interaction des tourbillons principaux générés par l'hélice avec le fuselage de l'aéronef et/ou avec la nacelle du turbopropulseur. Le capteur 35 précité peut ainsi être monté sur le fuselage de l'aéronef ou la nacelle du turbopropulseur.

Dans le cas d'une turbomachine à soufflante carénée, l'invention peut être appliquée à l'hélice de soufflante de façon à limiter les nuisances sonores liées à l'interaction des tourbillons principaux générés par cette hélice avec le pylône de liaison de la turbomachine à l'aéronef. Le capteur 35 précité peut ainsi être monté sur le pylône.

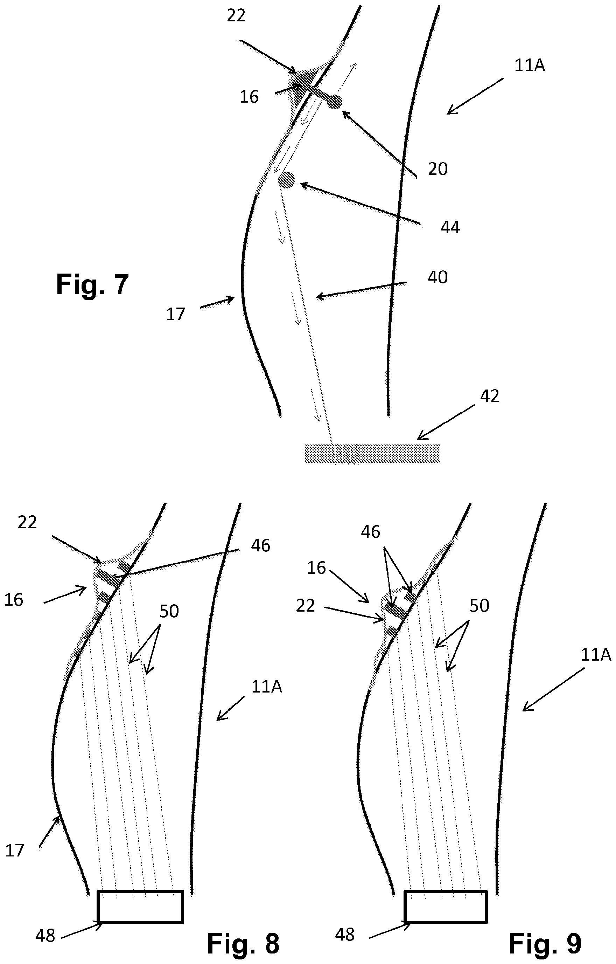

La figure 7 est une vue correspondant à la figure 3 et représentant une variante de réalisation de l'invention et plus particulièrement une variante de réalisation des moyens de réglage de la position de l'excroissance 16 le long du bord d'attaque 17 de la pale 11A, qui sont ici du type à câble(s) 40.

L'excroissance 16 est ici formée par un dôme et est portée par un doigt 20 qui est guidé dans une gorge s'étendant le long d'une partie du bord d'attaque 17 de la pale 11A.

L'excroissance 16 peut être amenée et maintenue dans n'importe quelle position sur le bord d'attaque 17, entre deux positions extrêmes respectivement basse et haute. Dans le cas où la position optimale de l'excroissance 16 peut varier entre 0,75H et 0,85H (H étant la hauteur de la pale amont 11A) selon les conditions de fonctionnement, la position extrême basse est de préférence située à 0,75H et la position extrême haute est de préférence située à 0,85H.

L'excroissance 16 et la partie de la pale 11A s'étendant autour de la gorge sont recouvertes d'une membrane 22 de préférence souple et fine, qui est destinée à épouser la forme de l'excroissance 16 et du bord d'attaque 17 pour assurer une continuité de surface aérodynamique entre l'excroissance 16 et le reste de la pale et limiter les pertes de charge en fonctionnement. La partie de la membrane 22 recouvrant l'excroissance 16 définit une bosse qui reproduit de préférence le plus fidèlement possible la forme et les dimensions de l'excroissance 16. Le déplacement de l'excroissance 16 le long du bord d'attaque 17 entraîne une déformation, de préférence élastique, de la membrane 22. La bosse définie par la membrane 22 se déplace alors en suivant l'excroissance 16.

Comme cela est schématiquement représenté sur les dessins, la pale 11A est équipée d'au moins un câble 40 dont une extrémité est attachée au doigt 20 et dont l'extrémité opposée est attachée à un arbre 42 rotatif et est configurée, d'une part, pour s'enrouler autour de l'arbre lorsque ce dernier tourne dans un premier sens autour de son axe de rotation, et d'autre part, pour se dérouler lorsque l'arbre tourne dans un second sens opposé. Dans l'exemple représenté, l'enroulement du câble 40 autour de l'arbre 42 entraîne un déplacement vers la position basse de l'excroissance 16, et un déroulement du câble entraîne un déplacement vers la position haute de l'excroissance. Ce dernier déplacement est rendu possible en fonctionnement par les forces centrifuges auxquelles est soumise l'excroissance 16, liées à la rotation de l'hélice. En effet, en fonctionnement, l'excroissance 16 est soumise à un effort permanent, orienté vers la direction opposée à la tension du câble 40.

On comprend que la pale 11A est, dans l'exemple représenté, au moins en partie creuse et comprend au moins une cavité interne de logement du câble 40.

Il est possible de monter, dans la cavité de la pâle 11A, une ou plusieurs poulies 44 de guidage du câble, pour faciliter la cinématique du système et optimiser les contraintes exercées sur la liaison glissière entre l'excroissance 16 et la pâle 11A.

Les figures 8 et 9 sont des vues correspondant à la figure 3 et représentant une autre variante de réalisation de l'invention et plus particulièrement une variante de réalisation des moyens de réglage de la position de l'excroissance 16 le long du bord d'attaque 17 de la pale 11A, qui sont ici à matériau déformable du type piézoélectrique par exemple. Un tel matériau est un matériau qui se déforme lorsqu'il est soumis à un courant électrique.

L'excroissance 16 est ici formée par une série d'éléments 46 réalisés dans un tel matériau et disposés les uns à côté des autres le long d'une partie du bord d'attaque 17 de la pale 11A.

La forme de l'excroissance 16 est modifiable et peut comprendre une bosse au niveau de n'importe quelle position sur le bord d'attaque 17, entre deux positions extrêmes respectivement basse et haute. Dans le cas où la position optimale de l'excroissance 16 peut varier entre 0,75H et 0,85H (H étant la hauteur de la pale amont 11A) selon les conditions de fonctionnement, la position extrême basse est de préférence située à 0,75H et la position extrême haute de la figure 8 est de préférence située à 0,85H (la figure 9 représente une portion intermédiaire).

Les éléments 46 de l'excroissance 16 sont recouverts d'une membrane 22 de préférence souple et fine, qui est destinée à épouser la forme de l'excroissance 16 et du bord d'attaque 17 pour assurer une continuité de surface aérodynamique entre l'excroissance 16 et le reste de la pale et limiter les pertes de charge en fonctionnement. La partie de la membrane 22 recouvrant l'excroissance 16 définit une bosse qui reproduit de préférence le plus fidèlement possible la forme et les dimensions de l'excroissance 16. Les déformations de l'excroissance 16 le long du bord d'attaque 17 entraînent une déformation, de préférence élastique, de la membrane 22. La bosse définie par la membrane 22 se déplace alors en suivant l'excroissance 16.

Comme cela est schématiquement représenté dans les dessins, la pale 11A est équipée de moyens 48 d'alimentation électrique des éléments 46, lesdits moyens 48 étant reliés aux éléments par des fils électriques 50. Chaque élément peut être alimenté de façon indépendante de façon à obtenir la forme souhaitée de l'excroissance 16.

On comprend que la pale 11A est dans l'exemple représenté au moins en partie creuse et comprend au moins une cavité interne de logement des fils 50 voire des moyens d'alimentation 48.

## Revendications

1. Pale (11A) pour une hélice (7) de turbomachine (1), notamment à soufflante non carénée, comportant sur son bord d'attaque (17) une excroissance (16), **caractérisée en ce qu'**elle comprend des moyens (20, 21) de réglage de la position de l'excroissance le long de son bord d'attaque.

2. Pale (11A) selon la revendication 1, **caractérisée en ce que** l'excroissance (16) est située à l'extrémité d'un doigt (20) qui est guidé en translation dans une gorge (21) s'étendant le long d'une partie du bord d'attaque (17) de la pale.

3. Pale (11A) selon la revendication 2, **caractérisée en ce que** l'excroissance (16) et la partie du bord d'attaque (17) comportant la gorge (21) sont recouvertes d'une membrane (22) souple fixée à la pale.

4. Pale (11A) selon la revendication 3, **caractérisée en ce qu'**elle comprend des moyens (25) de maintien sous vide du volume contenu entre la membrane (22) et le bord d'attaque (17) de la pale.

5. Pale (11A) selon la revendication 3 ou 4, **caractérisée en ce qu'**elle comprend des moyens (23) de lubrification de l'interface (24) entre l'excroissance (16) et la membrane (22).

6. Pale (11A) selon l'une des revendications précédentes, **caractérisée en ce que** l'excroissance (16) est reliée à la tige de piston (28) d'un vérin (26, 34) de commande du déplacement de l'excroissance le long du bord d'attaque (17).

7. Pale (11A) selon l'une des revendications 1 à 5, **caractérisée en ce que** l'excroissance (16) est reliée à une extrémité d'au moins un câble (40) dont une extrémité opposée est attachée à un arbre (42) rotatif en vue de l'enroulement du câble autour dudit arbre.

8. Pale (11A) selon la revendication précédente, **caractérisée en ce que** ledit au moins un câble est guidé par au moins une poulie (44).

9. Pale (11A) selon la revendication 1, **caractérisée en ce que** l'excroissance (16) comprend une série d'éléments (46) en matériau déformable du type piézoélectrique.

10. Pale (11A) selon la revendication précédente, **caractérisée en ce que** chacun desdits éléments (46) est relié de manière indépendante à des moyens (48) d'alimentation électrique.

11. Hélice (7), notamment pour turbomachine à soufflante non carénée, **caractérisée en ce qu'**elle comporte une pluralité de pales (11A) du type de celle spécifiée sous l'une des revendications 1 à 10.

12. Hélice (7) selon la revendication 11, comportant une pluralité de pales (11A) selon la revendication 6, **caractérisée en ce que** les excroissances (16) des pales sont reliées à la tige de piston d'un unique vérin de commande (34).

13. Turbomachine (1), notamment à soufflante non carénée, **caractérisée par le fait qu'**elle comporte au moins une hélice (7) du type de celle spécifiée sous la revendication 11 ou 12.

14. Turbomachine (1) selon la revendication 13, **caractérisée en ce qu'**elle comprend un calculateur et un capteur (35), tel qu'un récepteur acoustique, monté au voisinage de l'hélice (7) et configuré pour transmettre des informations au calculateur, le calculateur étant relié à des moyens (26, 34) d'actionnement des moyens (20, 21) de réglage des positions des excroissances (16à) des pales (11A).

15. Procédé de réduction des émissions sonores d'une turbomachine (1) selon la revendication 13 ou 14, **caractérisé en ce que** la position de l'excroissance (16) le long du bord d'attaque (17) de chaque pale (11A) est réglée en fonction des conditions de fonctionnement de la turbomachine, et en particulier en fonction d'un jeu de paramètres de fonctionnement.

16. Procédé selon la revendication 15, **caractérisé en ce que**, des positions optimales des excroissances (16) des pales (11A) étant prédéterminées pour plusieurs conditions de fonctionnement, il consiste, pour une condition de fonctionnement donnée, à mettre les excroissances des pales dans la position optimale prédéterminée correspondante.

17. Procédé selon la revendication 15 ou 16, **caractérisé en ce qu'**il comprend une étape de détection de tourbillons générés par l'hélice (7) ou de détection du bruit provoqué par l'interaction de ces tourbillons avec une surface située en aval, et une étape de réglage de la position des excroissances (16) des pales (11A) en fonction du signal détecté à l'étape précédente.

## Patentansprüche

1. Schaufel (11A) für einen Propeller (7) einer Turbomaschine (1), insbesondere mit nicht ummanteltem Gebläse, die an ihrer Anströmkante (17) eine Ausstülpung (16) aufweist, **dadurch gekennzeichnet, dass** sie Mittel (20, 21) zum Einstellen der Position der Ausstülpung entlang ihrer Anströmkante umfasst.

2. Schaufel (11A) nach Anspruch 1, **dadurch gekennzeichnet, dass** sich die Ausstülpung (16) am Ende eines Fingers (20) befindet, der verschiebbar in einer Rille (21) geführt wird, die sich entlang eines Teils der Anströmkante (17) der Schaufel erstreckt.

3. Schaufel (11A) nach Anspruch 2, **dadurch gekennzeichnet, dass** die Ausstülpung (16) und der Teil der Anströmkante (17), der die Rille (21) aufweist, mit einer weichen Membran (22) bedeckt sind, die an der Schaufel fixiert ist.

4. Schaufel (11A) nach Anspruch 3, **dadurch gekennzeichnet, dass** sie Mittel (25) zur Aufrechterhaltung eines Vakuumvolumens umfasst, das zwischen der Membran (22) und der Anströmkante (17) der Schaufel beinhaltet ist.

5. Schaufel (11A) nach Anspruch 3 oder 4, **dadurch gekennzeichnet, dass** sie Mittel (23) zur Schmierung der Verbindungsstelle (24) zwischen der Ausstülpung (16) und der Membran (22) umfasst.

6. Schaufel (11A) nach einem der vorstehenden Ansprüche, **dadurch gekennzeichnet, dass** die Ausstülpung (16) mit der Kolbenstange (28) eines Zylinders (26, 34) zur Steuerung der Bewegung der Ausstülpung entlang der Anströmkante (17) verbunden ist.

7. Schaufel (11A) nach einem der Ansprüche 1 bis 5, **dadurch gekennzeichnet, dass** die Ausstülpung (16) mit einem Ende mindestens eines Kabels (40) verbunden ist, von dem ein gegenüber liegendes Ende an einer rotierenden Welle (42) zum Aufwickeln des Kabels rund um die Welle befestigt ist.

8. Schaufel (11A) nach dem vorstehenden Anspruch, **dadurch gekennzeichnet, dass** das mindestens eine Kabel von mindestens einer Umlenkrolle (44) geführt wird.

9. Schaufel (11A) nach Anspruch 1, **dadurch gekennzeichnet, dass** die Ausstülpung (16) eine Reihe von Elementen (46) aus verformbarem Material piezoelektrischer Art umfasst.

10. Schaufel (11A) nach dem vorstehenden Anspruch, **dadurch gekennzeichnet, dass** jedes der Elemente (46) unabhängig mit Mitteln (48) zur Stromversorgung verbunden ist.

11. Propeller (7), insbesondere für eine Turbomaschine mit nicht ummanteltem Gebläse, **dadurch gekennzeichnet, dass** er eine Vielzahl von Schaufeln (11A) von der Art wie jene aufweist, die unter einem der Ansprüche 1 bis 10 spezifiziert wurden.

12. Propeller (7) nach Anspruch 11, der eine Vielzahl von Schaufeln (11A) nach Anspruch 6 aufweist, **dadurch gekennzeichnet, dass** die Ausstülpungen (16) der Schaufeln mit der Kolbenstange eines einzelnen Steuerzylinders (34) verbunden sind.

13. Turbomaschine (1), insbesondere mit nicht ummanteltem Gebläse, **dadurch gekennzeichnet, dass** sie mindestens einen Propeller (7) von der Art aufweist, wie er unter Anspruch 11 oder 12 spezifiziert wurde.

14. Turbomaschine (1) nach Anspruch 13, **dadurch gekennzeichnet, dass** sie einen Rechner und einen Fühler (35), wie etwa einen akustischen Empfänger, umfasst, der in der Nähe des Propellers (7) angebracht und konfiguriert ist, Informationen an den Rechner zu übermitteln, wobei der Rechner mit Mitteln (26, 34) zur Betätigung der Mittel (20, 21) zum Einstellen der Positionen der Ausstülpungen (16ä) der Schaufeln (11A) verbunden ist.

15. Verfahren zur Verringerung der Schallemissionen einer Turbomaschine (1) nach Anspruch 13 oder 14, **dadurch gekennzeichnet, dass** die Position der Ausstülpung (16) entlang der Anströmkante (17) jeder Schaufel (11A) in Abhängigkeit von den Betriebsbedingungen der Turbomaschine, und insbesondere in Abhängigkeit eines Satzes von Betriebsparametern, eingestellt wird.

16. Verfahren nach Anspruch 15, **dadurch gekennzeichnet, dass**, wenn optimale Positionen der Ausstülpungen (16) der Schaufeln (11A) für mehrere Betriebsbedingungen vorbestimmt werden, es darin besteht, für eine gegebene Betriebsbedingung die Ausstülpungen der Schaufeln in die entsprechende vorbestimmte optimale Position zu bringen.

17. Verfahren nach Anspruch 15 oder 16, **dadurch gekennzeichnet, dass** es einen Schritt des Erkennens von Wirbeln, die von dem Propeller (7) erzeugt werden, oder des Erkennens eines Geräuschs, das durch das Zusammenwirken dieser Wirbel mit einer stromabwärts befindlichen Oberfläche verursacht wird, und einen Schritt des Einstellens der Position der Ausstülpungen (16) der Schaufeln (11A) in Abhängigkeit von dem im vorhergehenden Schritt erkannten Signal umfasst.

## Claims

1. Blade (11A) for a propeller (7) of a turbine engine (1), in particular of the unducted-fan type, comprising a protrusion (16) on its leading edge (17), **characterised in that** it comprises means (20, 21) for adjusting the position of the protrusion along its leading edge.

2. Blade (11A) according to claim 1, **characterised in that** the protrusion (16) is situated at the end of a finger (20) that is guided in translation in a groove (21) extending along a part of the leading edge (17) of the blade.

3. Blade (11A) according to claim 2, **characterised in that** the protrusion (16) and the part of the leading edge (17) comprising the groove (21) are covered with a flexible membrane (22) fixed to the blade.

4. Blade (11A) according to claim 3, **characterised in that** it comprises means (25) for keeping under vacuum the space contained between the membrane (2) and the leading edge (17) of the blade.

5. Blade (11A) according to claim 3 or claim 4, **characterised in that** it comprises means (23) for lubricating the interface (24) between the protrusion (16) and the membrane (22).

6. Blade (11A) according to any of the preceding claims, **characterised in that** the protrusion (16) is connected to the piston rod (28) of an actuator (26, 34) controlling the movement of the protrusion along the leading edge (17).

7. Blade (11A) according to any of claims 1 to 5, **characterised in that** the protrusion (16) is connected to one end of at least one cable (40), an opposite end of which is attached to a rotary shaft (42) with a view to coiling the cable around said shaft.

8. Blade (11A) according to the preceding claim, **characterised in that** said at least one cable is guided by at least one pulley (44).

9. Blade (11A) according to claim 1, **characterised in that** the protrusion (16) comprises a series of elements (46) made from deformable material of the piezoelectric type.

10. Blade (11A) according to the preceding claim, **characterised in that** each of said elements (46) is connected independently to electrical supply means (48).

11. Propeller (7), in particular for an unducted-fan turbine engine, **characterised in that** it comprises a plurality of blades (11A) of the type specified in any of claims 1 to 10.

12. Propeller (7) according to claim 11, comprising a plurality of blades (11A) according to claim 6, **characterised in that** the protrusions (16) on the blades are connected to the piston rod of a single control actuator (34).

13. Turbine engine (1), in particular of the unducted-fan type, **characterised in that** it comprises at least one propeller (7) of the type specified in claim 11 or claim 12.

14. Turbine engine (1) according to claim 13, **characterised in that** it comprises a computer and a sensor (35), such as an acoustic receiver, mounted in the vicinity of the propeller (7) and configured so as to transmit information to the computer, the computer being connected to means (26, 34) for actuating the means (20, 21) for adjusting the positions of the protrusions (16) on the blades (11A).

15. Method for reducing the noise emissions of a turbine engine (1) according to claim 13 or claim 14, **characterised in that** the position of the protrusion (16) along the leading edge (17) of each blade (11A) is adjusted according to the operating conditions of the turbine engine, and in particular according to a set of operating parameters.

16. Method according to claim 15, **characterised in that**, optimal positions of the protrusions (16) on the blades (11A) being predetermined for a plurality of operating conditions, it consists, for a given operating condition, of putting the protrusions on the blades in the corresponding predetermined optimum position.

17. Method according to claim 15 or claim 16, **characterised in that** it comprises a step of detecting vortices generated by the propeller (7) or detecting the noise caused by the interaction of these vortices with a surface situated downstream, and a step of adjusting the position of the protrusions (16) on the blades (11A) according to the signal detected at the previous step.
